# EUROPEAN PATENT SPECIFICATION

(11) **EP 0 827 125 B1**
(45) Date of publication and mention of the grant of the patent: **08.12.2004**
(21) Application number: 97114776.4
(22) Date of filing: 26.08.1997
(51) Int. Cl.: G08G 1/0968, G08G 1/0969, G01C 21/20

(54) **Land vehicle navigation apparatus with guidance display image limiter for recognizability enhancement**
Navigationsgerät für Landfahrzeuge mit beschränkter Anzeige für die Zielführung zur Verbesserung der Lesbarkeit
Appareil de navigation pour véhicule terrestre avec limitation de l'image d'affichage du guidage pour améliorer la lisibilité

(30) Priority: 30.08.1996 JP 23030196
(43) Date of publication of application: 04.03.1998
(73) Proprietor: AISIN AW CO., LTD., Anjo-shi Aichi-ken 444-11 (JP)
(72) Inventor: Watanabe, Kazuyuki, c/o Aisin Aw Co., Ltd., Anjo-shi, Aichi-ken 444-11 (JP)
(74) Representative: Pellmann, Hans-Bernd, Dipl.-Ing.

(56) References cited:
- EP-A- 0 346 492
- US-A- 4 914 605

## Description

The present invention relates generally to mobile electronics and, more particularly, to vehicle navigation systems for searching for a route to a destination location and performing route guidance.

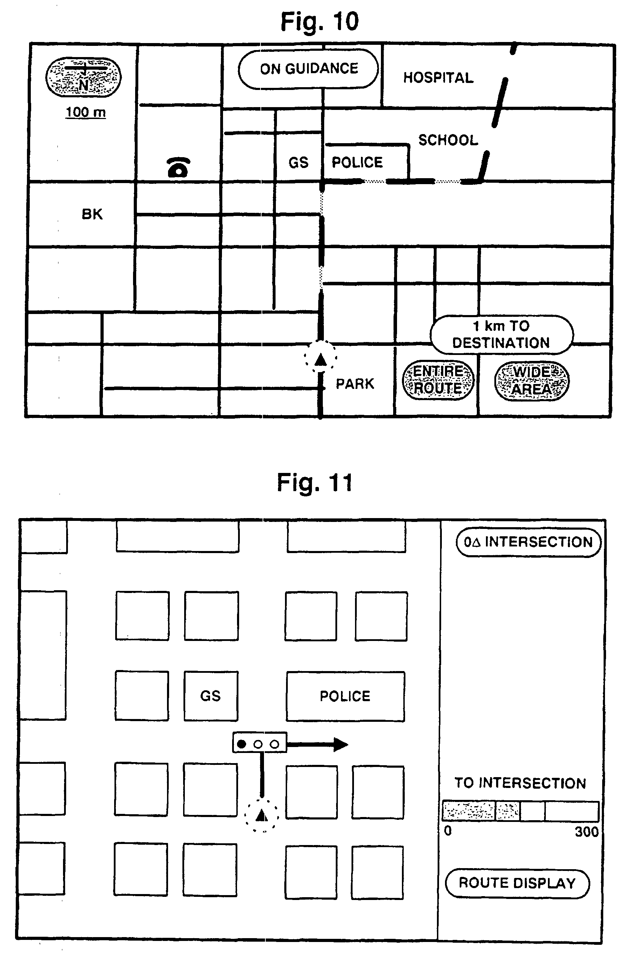

In prior known land vehicle navigation apparatus, where a route search to a destination is made based on input of several locations including pass-through points and destination, and route guidance is performed using display screens and/or electronically synthesized voices based on a searched guidance route, route guidance using intersection diagrams is carried out at a guidance intersection. In the route guidance using maps, a nearby road map with a present position of the vehicle being as its center is displayed along with its associated along-the-road characteristic objects as shown in Fig. 10 in such a manner that a guidance route (fat broken line) and a present position mark (a combination of a broken-line circle and a triangle) are overlaid for display on the map; however, when the present position is at a specific location which is placed before a to-be-next-turn traffic intersection (guidance intersection) and which is spaced apart from it by a predefined distance (300 m, for example), a closed-up intersection diagram which visually indicates an intersection concerned is displayed on the screen at an increased magnification along with some associative points by use of logo marks or "landmarks," each of which points may act as an eye-catch sign for the intersection and which include a gas station GS, convenience store, bank, public facility and the like as shown in Fig. 11, by way of example.

However, where an intersection diagram is displayed, since all the roads are unconditionally displayed as shown in Fig. 11, when there are a plurality of roads near an intersection to be displayed, the resulting display screen becomes complicated reducing the visibility of the screen, which would result in a problem of incapability of rapid recognition of a route (travel direction).

EP-A-0 346 492 discloses a land vehicle navigation system wherein node data, crossing data, and road data are provided as map data. These data are indicative solely of intersections requiring guidance; intersections not requiring guidance are excluded.

It is therefore an object of the present invention to provide an improved vehicle navigation system capable of avoiding the problems faced with the prior art.

It is another object of the invention to provide an improved land vehicle navigation system enabling a travel path at a guidance intersection to be easily recognized by improving visibility of intersection diagrams.

To attain the foregoing objects the present invention provides vehicle navigation apparatus as defined in claim 1. The apparatus performs guidance to a destination along a searched route while tracking a present position. The apparatus may perform display/guidance with respect to intersections at which route guidance is to be effectuated by use of detailed drawings, wherein when a detailed drawing is drawn or illustrated in conjunction with one of such intersections, the information other than truly necessary for guidance is prevented from being visualized by limiting roads to be illustrated.

In accordance with another aspect of the invention, the vehicle navigation apparatus may include a storage device for storage of a route to a destination location and route guidance data, an intersection drawing visualizer or "drafter" for drafting or illustrating as an intersection drawing details of a location near an intersection as determined to need guidance along a route based on the data stored in the storage device, and a controller for visually indicating an intersection drawing without displaying information other than truly necessary information items by adding a limitation to the information to be presented by the intersection drawing visualizer.

Further optional features of the invention are as follows. The controller determines whether or not preset criteria are satisfied, and adds a limitation to information failing to satisfy the criteria; as such information, the controller adds a limitation to information being drawn by determining whether it is a road connected to a guidance intersection, whether it is a road connected to a route under guidance, or whether it is a passable road. The controller makes use of the same color as a background color for information to be added with the limitation, or the controller does not depict information to be added with the limitation. The controller displays an intersection diagram upon detection of an intersection diagram display instruction. The apparatus is also provided with a present position detector for detecting a present vehicle position while allowing the controller to display an intersection diagram in response to receipt of an intersection display enlargement instruction signal under the condition that a present vehicle position as detected by the detector comes closer to a specific location which is placed before, or on this way of, a guidance intersection concerned and which is spaced apart therefrom by a predetermined distance.

These and other objects, features and advantages of the invention will be apparent from the following more particular description of preferred embodiments of the invention, as illustrated in the accompanying drawings.

### BRIEF DESCRIPTION OF THE DRAWINGS

Fig. 1 is a diagram showing an overall configuration of a land vehicle navigation apparatus in accordance with one embodiment of the invention.
Figs. 2A-2E, 3A-3B and 4A-4B are diagrams showing structures of several data files as employed in the navigation apparatus of Fig. 1.
Fig. 5 is a flow diagram of the overall operation of the vehicle navigation apparatus embodying the invention.
Fig. 6 is a flow diagram of a route guidance/display control procedure of the navigation apparatus.
Fig. 7 is a flowchart of an enlarged intersection drawing presentation processing of the apparatus.
Figs. 8A-8B are diagrams each showing a display example of an intersection drawing in the apparatus.
Fig. 9 is a flowchart of another exemplary intersection drawing presentation processing adaptable for use in the navigation apparatus shown in Fig. 1.
Figs. 10-11 show typical possible route guidance display images in the prior art.

### DETAILED DESCRIPTION OF THE INVENTION

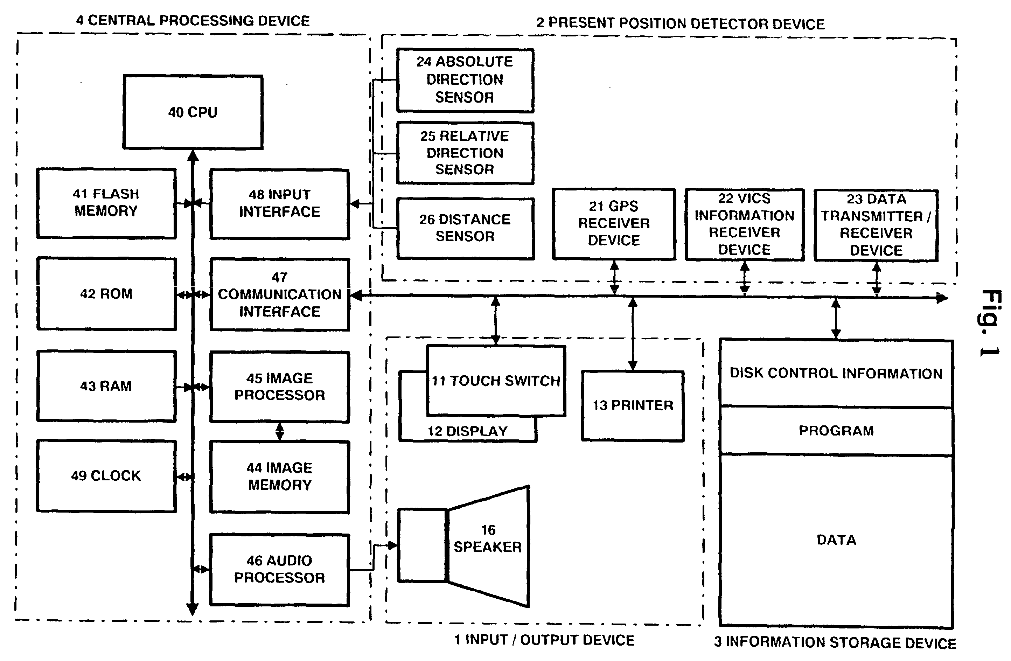

Referring now to Fig. 1, a land vehicle navigation apparatus in accordance with one preferred embodiment of the invention is constituted from an input/output (I/O) device 1, a present position detector device 2, information storage device 3 and a central processing device 4. The I/O 1 is for inputting and outputting information as to route guidance. The present position detector 2 operates to detect information concerning a present vehicle position of a vehicle. The storage 3 stores therein several data items including, but not limited thereto, navigation data as required for route calculations and display guidance data necessary for guidance. The central processor 4 performs display/audio guidance processings required for route search processings and route guidance and which also provides control over the entire system.

The I/O 1 has functions of instructing navigation processings to the central processor 4 in conformity with a vehicle operator's intention and of printing out processed data, thereby permitting input of a target place or destination while enabling guidance information to output via voices and/or screens when required by the operator. As a means for attaining such functions, its input section has a touch sensitive panel 11 and operation switches for input of a destination based on the telephone number and map coordinates thereof as well as for request of route guidance. Obviously, alternatively other functionally equivalent input devices may be provided, including a remote commander. An output section includes a display unit 12 which visually indicates input data and also automatically displays on its screen route guidance as graphics images upon reception of a request from a vehicle operator such as a driver, a printer 13 which produces hard copies of data as processed by the central processor 4 and those of data as stored in the information storage 3, and a speaker 16 for audibly outputting voice route guidance.

Here, there may be added a voice recognition device for enabling voice input and a record card reader for reading data recorded in IC cards or magnetic cards. There may also be added a data communication device which is for data communications between the navigation apparatus and information sources including an information center for storing therein data necessary for navigation and providing information via communication links upon the vehicle operator's request, and an electronic personal information management tool prestoring operator's specific data, such as map data, destination data and the like.

The display unit 12 may be a color cathode ray tube (CRT) monitor or color liquid crystal display (LCD) panel, for color-display outputting all the screens necessary for navigation including a route setting screen, route segment drawing screen, traffic intersection drawing screen and the like based on map data and guidance data to be processed by the central processor 4, and also for displaying on a present screen some buttons for use in performing operations for setting route guidance and changing guidance and screens during route guidance. In particular, pass-through intersection information such as the name or title of an intersection to be passed through will be color-displayed on the road-segment drawing screen in a pop-up manner at any time as necessary.

This display 12 is provided within an instrumental panel near the driver's sheet, thus enabling the driver by himself to affirm a present location of his or her vehicle by viewing a road-segment drawing while acquiring therefrom information as to a future route from here. The display 12 comes with the touch panel 11 corresponding to the display of function buttons, and is thus arranged so that the aforesaid operations are effected on the basis of a signal as input upon touch of an appropriate button. An input signal generator which is formed by this button, the touch switch and the like may constitute the input section.

The present position detector 2 includes a global positioning system (GPS) receiver 21 for acquiring information by utilizing the present vehicle position satellite GPS architecture. A vehicle information communications system (VICS) information receiver 22 is provided for acquiring information by use of FM multiple broadcasts, radio wave beacon, optical beacon and others. A data transmitter/receiver 23 is connected for bidirectionally communicating-by use of a mobile telephone set, personal computer, or the like-information with the information center (ATIS, for example) and with other vehicles. An absolute direction sensor 24 is for detecting the travelling direction of the vehicle on the absolute direction basis by utilizing geomagnetism, by way of example. A relative direction sensor 25 is for detection of the vehicle's travelling direction on the relative direction basis by use of a steering sensor or gyro sensor, for instance. A distance sensor 26 is connected for detection of the travelled distance of the vehicle from the number of rotation of a wheel shaft, for example. The present position detector 2 operates to transmit and/or receive road information and traffic information that are information concerning the vehicle's travel and to detect information as to the present vehicle position and further to transmit/receive information as to the present position.

The storage 3 is an external storage device which stores therein programs and data for navigation, and may be a compact disc read-only memory (CD-ROM) in this embodiment. The programs are comprised of an operating system (OS) section and an application section. The application section may include a map drawing preparing section, route search section, route guidance section, present position calculator section, destination setting operation control section and others. Stored here are a program for execution of processings such as route search, program for display output control necessary for route guidance and voice output control required for voice guidance as well as data necessary therefor, and further display information data necessary for route guidance and map display. The data may contain all the stored data items required for the navigation apparatus, which may consist of several data files including map data necessary for route guidance (road map, house map, building shape map, etc.), traffic intersection data, node data, road data, photograph data, registered point data, destination point data, guidance road data, detailed destination data, destination name data, phone number data, address data and others.

The central processor 4 includes a CPU 40 such as a microprocessor which performs a variety of kinds of arithmetic processings. Processor 4 also includes several memory devices: a "flash" electrically erasable programmable read-only memory (EEPROM) for reading programs out of a CD-ROM of the storage 3 and storing the same therein; a ROM 42 for storage of a program for executing program-check and update processings of the flash memory 41 (program loader); a random access memory (RAM) 43 for temporarily storing therein searched route guidance information such as the point coordinates of a destination being set presently, road name code number and the like along with data being subject to arithmetic processing; and, an image memory 44 such as a video RAM (VRAM) for storage of image data to be used for screen display onto the display 12. An image processor 45 is connected which fetches image data from the VRAM 44 on the basis of a display output control signal from the CPU 40 and applies thereto image processings to output the result to the display 12. An audio processor 46 is provided which is responsive to receipt of an audio output control signal from the CPU for synthesizing together an audible voice, phrase, sentence with one meaning, sound and the like and converts a synthesized signal into an analog signal, which is output to the speaker 16. A communication interface 47 is for handling I/O data over communication channels. A sensor input interface 48 is for fetching sensor signals from the present position detector 2. A clock 49 is connected for writing date and time into internal dialog information, and others. In central processor 4, when data acquired by each sensor of present position detector 2 is fetched through sensor input interface 48, CPU 40 operates based on the data to calculate the coordinates of a present vehicle position at constant time intervals and write it into RAM 43 temporarily. The present position coordinates are as a result of a map-matching processing in view of detection errors of several kinds of data items. Also, output values of each sensor is always subject to correction. Here, the route guidance is arranged to enable the driver to select any one of the screen display and voice output.

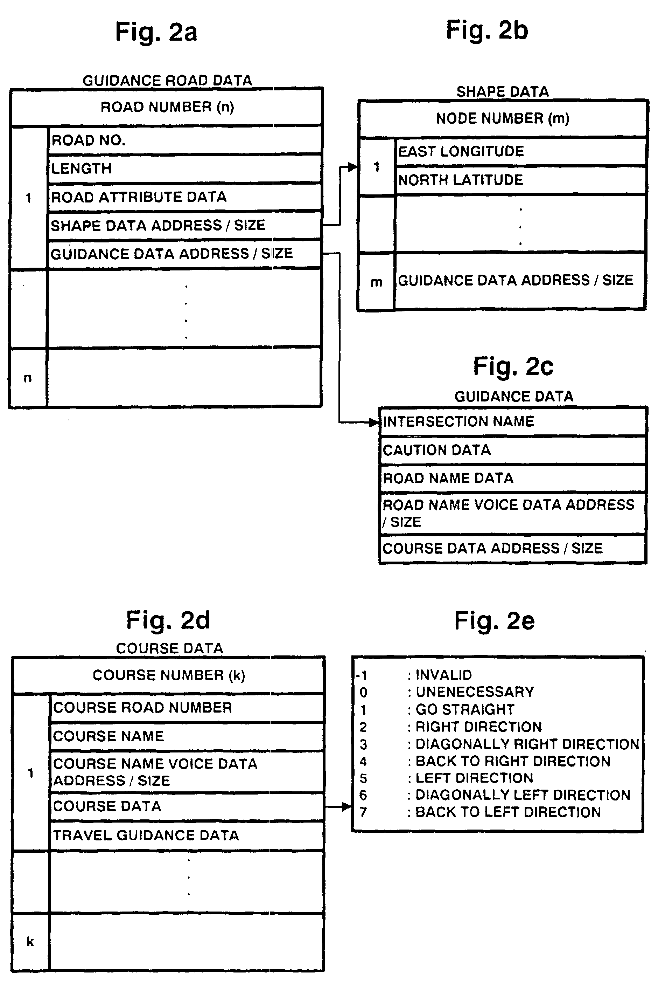

Figs. 2A through 4B show exemplary main data files as stored in the information storage device, wherein a guidance road data file may consist-for each of the road number n-of a road number, length, road attribute data, shape data address/size, and guidance data address/size as shown in Fig. 2A, which are obtained by a route search and stored as the data necessary for execution of route guidance.

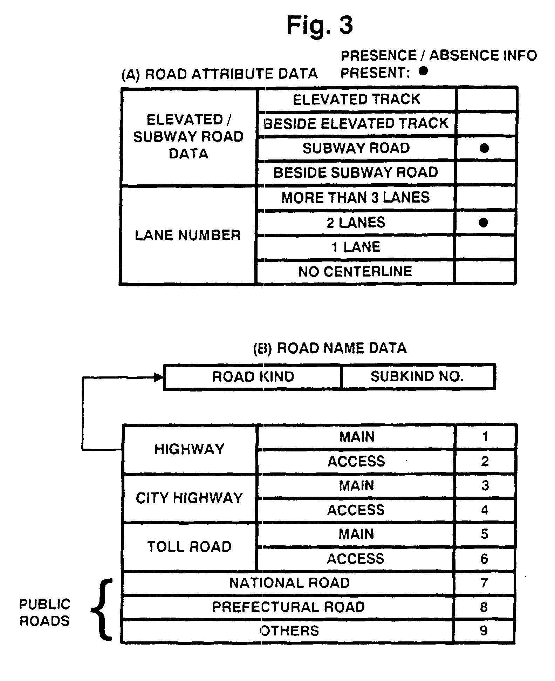

The road number is set independently of the directions (approaching path, return path) with respect to each road between adjacent branch points. The road attribute data is road guidance assisting information data; as shown in Fig. 3A, this is the data indicative of elevated/subway road information and lane number information, wherein the former may consist of data items representative of whether a road of interest is an elevated track, elevated-track side, subway line, or subway-line side. As shown in Fig. 2B, the shape data has coordinate data items which consist of east longitude and north latitude values with respect to each of node number m when divided by a plurality of nodes of each road. As shown in Fig. 2C, the guidance data may consist of an intersection (or branch point) name, caution data, road name data, the address and size of road name pronunciation data, and the address and size of course data.

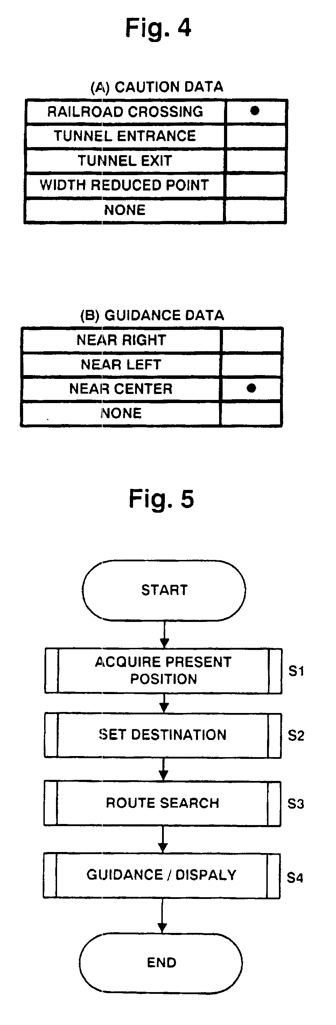

As shown in Fig. 4A, the caution data of the guidance data is the data which indicates whether it is a railroad crossing, tunnel entrance, tunnel exit, lane width reduced point, or absence, and is the data for advising the driver to be careful at crossings other than branch points, tunnels, or the like. As shown in Fig. 3B, the road name data is the data representative of road kind-dependent information showing a highway, city highway, toll road, or ordinary public road (national road, prefectural road, others), and information showing whether a road of interest is the main lane or access lane with respect to the highway, city highway and toll road; the road name data may consist of road kind data and further interkind or "subkind" number indicative of the individual number data within each road kind. As shown in Fig. 2D, the course data may consist of a course road number, course name, the address ahd size of course name voice data, course direction data, and travel guidance data.

As shown in Fig. 2E, the course direction data of the course data is the data indicative of several information items including invalidness (no use of course direction data), unnecessity (no guidance), go-straight, the right direction, diagonally right direction, back-to-the-right direction, left direction, diagonally left direction, and back-to-the-left direction. As shown in Fig. 4B, the travel guidance data may store therein data items for use in providing guidance as to which lane is used for travel in cases where a plurality of lanes are provided, and indicate information as to whether the vehicle is traveling on a near-the-right, near-the-left or near-the-center part of a road, or on a road with no center line.

An operation of the navigation apparatus is as follows. See Fig. 5. As shown, when the program of the route guidance system gets started under control of the CPU 40 of central processor 4, the present position detector 2 first operates to detect a present vehicle position and display its nearby map with the detected present position being as the center thereof while at the same time displaying the name of such present position (step S1). Then, set a destination by use of a phone number, administrative address, facility name, registered point or the like (step S2). Next, perform a route search from the present position toward the destination (step S3). Once the route is determined, route guidance and display will be recurrently carried out until a vehicle actually arrives at the destination while allowing detector 2 to keep track of the present position loci (step S4). Where an input of a temporary stop-and-stay setting is made before arriving at the destination, a search area is set to perform a search again within the search area causing similar route guidance to be iteratively effected until vehicle's arrival at the destination.

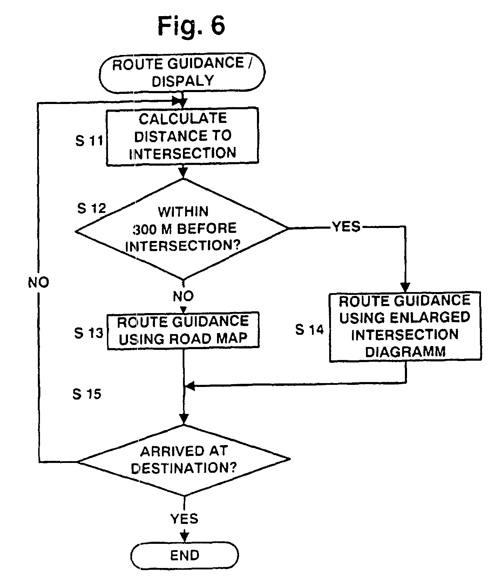

With regard to the prescribed route guidance/display processing, as shown in Fig. 6, calculate the distance from the present position to a guidance intersection (including a rotary or branch point) (step S11); and, judge whether the distance to the guidance intersection is within a range of 300 meters (step S12). And, if the distance to the guidance intersection is not within 300 meters then display a nearby road map with the present vehicle position being as its center along with some characteristic objects placed along the road while allowing a guidance route (fat broken line) and a present position mark (a combination of a broken-line circuit and a triangle) to be overlaid for display on the map (step S13). Alternatively, if the distance to the guidance intersection is within 300 meters then display in an intersection diagram only information as to certain roads, characteristic objects and others which are necessary for route guidance (step S14). The above processings will be repeated until the vehicle reaches the destination (step S15).

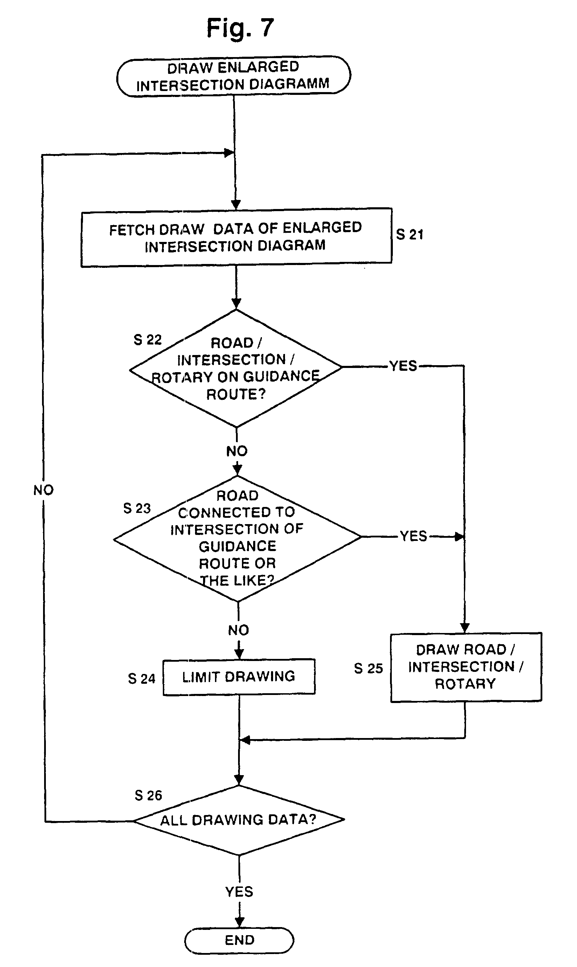

An intersection diagram drawing processing is as follows. As shown in Fig. 7, when drawing data of an intersection diagram is fetched (step S21), judge whether such drawing data is a road along the guidance route, a rotary or others (step S22) as well as whether it is a road connected to an intersection along the guidance route (step S23). In the case where none of these judgments are failed, limit drawing of a diagram (step S24); if either one of the judgments is successful then draw such road, intersection, and rotary (step S25). The foregoing system processing will be recurrently performed with respect to all the drawing data (step S26).

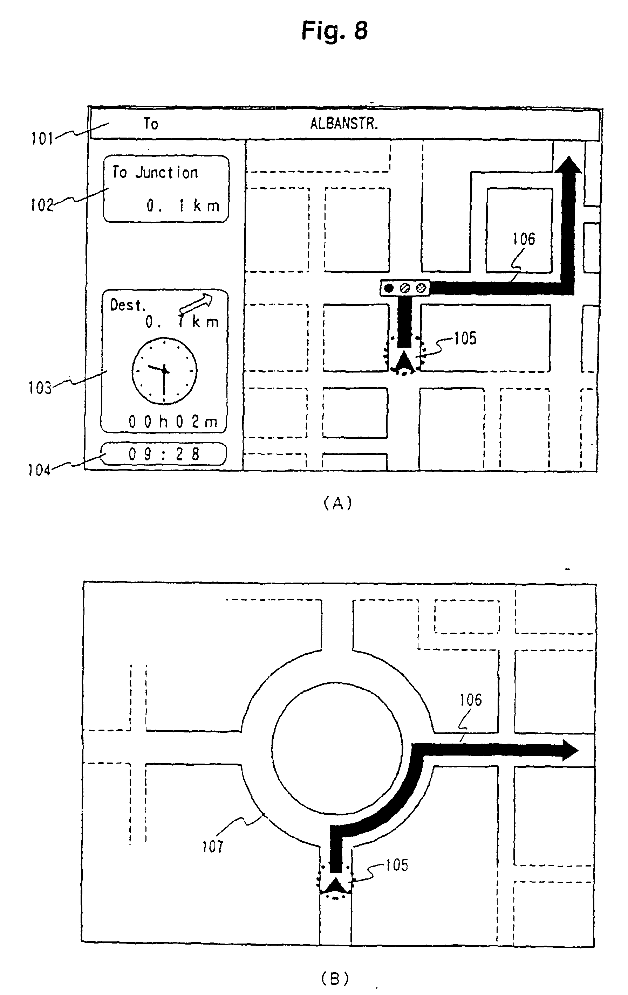

With the above-mentioned processings performed, in the intersection diagram, as shown in Figs. 8A and 8B, the guidance intersection, rotary, roads and characteristic objects other than the road guidance route connected to an intersection being passed through are drawn or illustrated up to a next intersection (including a rotary and branch point) whereas intersections and roads coupled thereto as designated by their elongate broken lines are limited in illustration. This illustration limitation may be attained, for example, by erasing from the intersection diagram such roads and intersections which are unnecessary for the route guidance by eliminating actual illustration of them; or alternatively, the limitation may be attained by virtually erasing from the intersection diagram such roads and intersection being unnecessary for route guidance by drawing them using the same color as a background color.

It should be noted in Fig. 8A that the name of a new street to which a travel is to be done from the guidance intersection-"To ALBANSTR."-is displayed in an area 101; a distance to the guidance intersection "To Junction 0.1 km" is displayed in an area 102; the destination's direction "_" and remainder distance "0.7 km" as well as an expected arrival time at the destination by an analog clock, and travel time to the destination "00h02m" are displayed in an area 103; and, a present time "09:28" is displayed in an area 104. The numeral 105 designates a present vehicle position mark, and 106 is the guidance route. In the case of a rotary, as shown in Fig. 8B, all the roads connected to a rotary 107 are illustrated. In this way, since only roads directly connected to the guidance route are displayed in the intersection diagram while erasing from the intersection diagram certain roads that are not directly connected to the guidance route and are out of the guidance route, recognizability of such guidance route with reference to the guidance intersection diagram is increased enabling the vehicle to turn to the travel direction at the guidance intersection without mistakes.

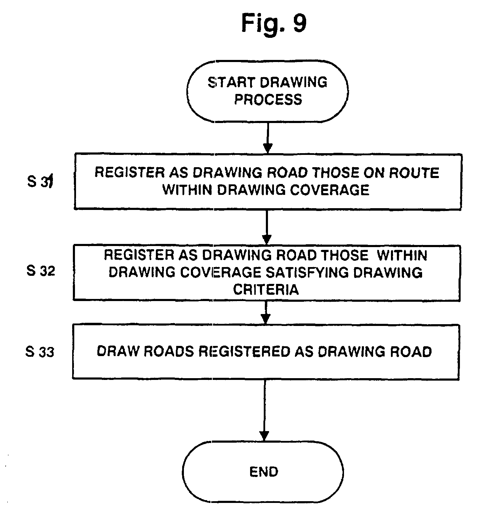

Fig. 9 is a diagram for explanation of an example of another intersection diagram depiction processing. As the intersection diagram drawing method, as shown in Fig. 9, when the drawing processing gets started, first register roads along the route within a drawing coverage as the roads to be illustrated (step S31); next, register as the illustration roads those roads within the drawing coverage which are out of the route and yet satisfy the drawing criteria (step S32). The criteria of such to-be-drawn road at this time are as follows: i) these are the roads connected to the guidance intersection, ii) they are the roads connected to the roads along the route, iii) they are passable roads (for example, it may be arranged such that one-way roads impermissible in intrusion and any other intrusion-impermissible roads available from the traffic information such as VICS or the like are treated as non-passable roads and are thus not subject to the drawing) or equivalents thereto. And, prepare or illustrate in the intersection diagram those roads that were registered as the to-be-visualized roads at the steps S31 and S32 (step S33).

The intersection diagram drawing or "draft" processing as explained in connection with Figs. 7 and 9 may be carried out during the route guidance using the intersection diagram at the step S14 in the route guidance/display processing as explained with reference to Fig. 6; however, in cases where the draft processing is incapable of being performed at high speeds and thus takes time, it may be arranged in a way such that the intersection diagram draft processing is executed in advance in the VRAM allowing a display to be changed when the vehicle is at a location which is a predetermined distance on this side of an intersection concerned. These processing execution programs may be prestored in the above-mentioned CD-ROM and then loaded into the flash memory. Alternatively, in order to lighten the aforesaid intersection diagram draft processing, intersection diagram data in conformity with route guidance with respect to each intersection may be stored in advance. Furthermore, while the to-be-drafted information is limited in accordance with criteria during displaying of an intersection diagram, such information may alternatively be prestored. In this case, the to-be-drafted information can be stored with respect to each intersection-approaching path.

Note also that the intersection drawing "draft" processing may be performed in advance. By way of example, where the draft processing is executed when the vehicle comes at a specific location that is 500 or 600 meters on this side of an intersection, it is possible to immediately change to an intersection diagram when the vehicle is 300-meter before such intersection. Since the start timing of such processing is determinable in accordance with the time as taken therefor, it may be a time point when the vehicle is at a location before an intersection with a specified distance therebetween as mentioned supra. Alternatively, the same may be determined based on the vehicle speed while retaining a sufficient timing which can "absorb" a time lag due to the display changing of such intersection diagram. Still alternatively, several processing start-up timing determination methods are prepared enabling an appropriate one to be selected from among them in accordance with areas such as cities or towns with much information. Obviously, the same may also be arranged so that when the vehicle turns at an intersection, the intersection drawing draft processing relating to a next guidance intersection is carried out permitting appropriate display in conformity with the driver's requests.

Additionally, the present invention should not be limited to the aforesaid embodiment and will be able to be modified into a variety of forms. For example, in the above embodiment, an intersection diagram is displayed exclusively when the present position comes closer to a specified location that is a predefined distance on this side of the guidance intersection; however, the intersection diagram may alternatively be displayed when detecting an intersection enlargement instruction of a switch or the like. Further, although only the intersections along the guidance route, rotary, and roads connected thereto are drafted or illustrated with the remaining roads being processed so that they are eliminated from illustration, or all the roads are subject to the draft processing with certain roads other than those connected to the rotary being in the same color as a background color, the draft processing may alternatively be performed in such a way that it employs display schemes using some quiet colors such as those close to the background color, certain quiet colors that are different from those used for the guidance intersection, rotaries and roads connected thereto, broken lines, or the like. Furthermore, the information necessary for route guidance may be limited only to passable roads other than those roads which are in the do-not-enter condition from the guidance route, and roads with their width greater than a specified lane width after comparison and judgment of road width values.

As apparent from the above explanations, according to the present invention, an intersection diagram is displayed when a vehicle is at specific location being placed before a guidance intersection with a specified distance left therebetween, and simultaneously, not all the information with respect to such intersection but limited roads and information decided to be necessary for route guidance are displayed while forcing roads and information which are judged to be unnecessary and unconcern for the route guidance to be eliminated from display images on the guidance screen; it is thus possible to display the intersection diagram in a simplified and concise way.
Accordingly, it is possible to improve the visibility of the intersection diagram providing easy and accurate recognizability of a travel path (travel direction) at the intersection.
Furthermore, depicting and displaying only information necessary for route guidance as the intersection diagram may be capable of reducing the load of the system for depiction processings while reducing the time taken for such display.

Although the invention has been disclosed and illustrated with reference to a particular embodiment, the principles involved are susceptible for use in numerous other embodiments which will be apparent to persons skilled in the art. The invention is, therefore, to be limited only as indicated by the scope of the appended claims.

## Claims

1. Vehicle navigation apparatus for performing guidance to a destination location along a searched guidance route while tracking a present vehicle location, and for displaying roads around an intersection under request for guidance when a vehicle approaches said intersection, wherein roads which are neither (S22) on the guidance route nor (S23) connected to said intersection of the guidance route among said road data of roads around said intersection are prevented from being displayed.

2. Vehicle navigation apparatus in accordance with claim 1, comprising:
storage means (3) for storing therein a route leading to a destination location and route guidance data;
control means (4) for drawing a map of the vicinity of present location of the vehicle;
intersection drawing generator means (4) for visualizing details of an area near an intersection as determined to need guidance along a route based on the data stored in said storage means (3) ;
display means (12) for displaying a map drawn by said control means and an intersection diagram visualized by said intersection drawing generator means, wherein
said intersection drawing generator means (4) adds a limitation to road(s) to be drawn so that it draws the intersection diagram to virtually prevent roads which are neither (S22) on the guidance route nor (S23) connected to said intersection of the guidance route among said road data of roads around said intersection from being displayed at said display means (12).

3. The apparatus of claim 2 wherein said control means (4) is adapted to determine whether preset criteria are met and to limit the information failing to satisfy the criteria.

4. The apparatus of claim 2 or 3 wherein said control means (4) is adapted to determine whether it is a road coupled to a route under guidance and to limit the information being visualized.

5. The apparatus of claim 2, 3, or 4, wherein said control means (4) is adapted to determine whether it is a passable road and to limit the information being visualized.

6. The apparatus of any one of claims 2 to 5, wherein said control means (4) is adapted to make use of a color identical to a background color for virtually preventing display of roads not to be displayed at said display means (12).

7. The apparatus of any one of claims 2 to 6, wherein said control means (4) is adapted to eliminate visualization of information not to be displayed.

8. The apparatus of any one of claims 2 to 7, wherein said control means (4) is adapted to permit displaying of an intersection drawing upon detection of issuance of a corresponding instruction signal.

9. The apparatus of any one of claims 2 to 8, further comprising:
present location detection means (21 to 26) for detecting a present location of a vehicle; wherein
said control means (4) is adapted to permit displaying of an intersection drawing upon detection of receipt of an intersection display enlargement instruction when the vehicle is at a specified location placed before a guidance intersection with a predetermined distance defined therebetween.

## Patentansprüche

1. Fahrzeugnavigationsvorrichtung zur Durchführung einer Führung zu einem Zielort entlang einer gesuchten Routenführung unter Verfolgung eines momentanen Fahrzeugortes und zur Anzeige von Straßen um eine Kreuzung, für die eine Führung gefordert ist, wenn ein Fahrzeug sich der Kreuzung nähert, wobei die Anzeige von Straßen unter den Straßendaten der Straßen um die Kreuzung verhindert wird, die weder (S22) auf der Routenführung liegen, noch (S23) mit der Kreuzung der Routenführung verbunden sind.

2. Fahrzeugnavigationsvorrichtung nach Anspruch 1, mit:
einer Speichereinrichtung (3) zum Speichern einer zu einem Zielort führenden Route und von Routenführungsdaten,
einer Steuereinrichtung (4) zum Zeichnen einer Karte der Umgebung des momentanen Ortes des Fahrzeugs,
einer Kreuzungszeichnungerzeugungseinrichtung (4) zum Visualisieren von Einzelheiten eines Bereichs nahe einer Kreuzung, für die das Erfordernis einer Führung entlang einer Route beruhend auf den in der Speichereinrichtung (3) gespeicherten Daten bestimmt ist,
einer Anzeigeeinrichtung (12) zum Anzeigen einer von' der Steuereinrichtung gezeichneten Karte und einer durch die Kreuzungszeichnungerzeugungseinrichtung visualisierten Kreuzungsdarstellung, wobei
die Kreuzungszeichnungerzeugungseinrichtung (4) eine Beschränkung zu zu zeichnenden Straßen derart hinzufügt, dass sie die Kreuzungsdarstellung zeichnet, um faktisch die Anzeige von Straßen unter den Straßendaten von Straßen um die Kreuzung auf der Anzeigeinrichtung (12) zu verhindern, die weder (S22) auf der Routenführung liegen, noch (S23) mit der Kreuzung der Routenführung verbunden sind.

3. Vorrichtung nach Anspruch 2, wobei die Steuereinrichtung (4) zum Bestimmen, ob voreingestellte Kriterien erfüllt sind, und zur Beschränkung der die Kriterien nicht erfüllenden Informationen eingerichtet ist.

4. Vorrichtung nach Anspruch 2 oder 3, wobei die Steuereinrichtung (4) zum Bestimmen, ob es sich um eine mit einer zu führenden Route verbundene Straße handelt, und zur Beschränkung der visualisierten Informationen eingerichtet ist.

5. Vorrichtung nach Anspruch 2, 3 oder 4, wobei die Steuereinrichtung (4) zum Bestimmen, ob es sich um eine fahrbare Straße handelt, und zur Beschränkung der visualisierten Informationen eingerichtet ist.

6. Vorrichtung nach einem der Ansprüche 2 bis 5, wobei die Steuereinrichtung (4) zum Verwenden einer mit einer Hintergrundfarbe identischen Farbe zum faktischen Verhindern einer Anzeige von nicht auf der Anzeigeeinrichtung (12) anzuzeigenden Straßen eingerichtet ist.

7. Vorrichtung nach einem der Ansprüche 2 bis 6, wobei die Steuereinrichtung (4) zum Entfernen einer Visualisierung nicht anzuzeigender Informationen eingerichtet ist.

8. Vorrichtung nach einem der Ansprüche 2 bis 7, wobei die Steuereinrichtung (4) dazu eingerichtet ist, ein Anzeigen einer Kreuzungsdarstellung auf die Erfassung einer Ausgabe eines entsprechenden Anweisungssignals hin zu erlauben.

9. Vorrichtung nach einem der Ansprüche 2 bis 8, ferner mit:
einer momentanen Ort-Erfassungseinrichtung (21 bis 26) zum Erfassen eines momentanen Ortes eines Fahrzeugs, wobei
die Steuereinrichtung (4) eingerichtet ist, ein Anzeigen einer Kreuzungsdarstellung auf die Erfassung eines Empfangs einer Kreuzungsanzeigevergrößerungsanweisung hin zu erlauben, wenn sich das Fahrzeug an einem festgelegten Ort vor einer Führungskreuzung mit einem dazwischen definierten, vorbestimmten Abstand befindet.

## Revendications

1. Dispositif de navigation de véhicule destiné à effectuer le guidage vers une adresse de destination le long d'un itinéraire guidé ayant fait l'objet d'une recherche, tout en localisant l'emplacement actuel du véhicule, et destiné à afficher les routes entourant une intersection en réponse à une demande de guidage lorsque le véhicule approche de ladite intersection ; dans lequel les routes, qui ne sont ni sur l'itinéraire guidé (S22), ni raccordée à ladite intersection de l'itinéraire guidé (S23) parmi lesdites données routières des routes entourant ladite intersection, sont empêchées de s'afficher.

2. Dispositif de navigation de véhicule selon la revendication 1, comprenant :
des moyens de stockage (3) destinés à stocker un itinéraire menant à un emplacement de destination et des données de guidage de cet itinéraire ;
des moyens de contrôle (4) destinés à tracer une carte du voisinage de l'emplacement actuel du véhicule ;
des moyens de génération de plan d'intersection (4) destiné à visualiser les détails d'une zone proche d'une intersection, déterminée comme nécessitant un guidage le long d'un itinéraire basé sur les données stockées dans lesdits moyens de stockage (3) ;
des moyens d'affichage (12) destinés à afficher une carte tracée par lesdits moyens de contrôle et un schéma d'intersection visualisé par lesdits moyens de génération de plan d'intersection, dans lequel
lesdits moyens de génération de plan d'intersection (4) ajoutent une limitation à la (ou aux) route(s) devant être tracées, de telle sorte qu'ils tracent le plan d'intersection de façon à empêcher les routes qui ne sont ni sur l'itinéraire guidée (S22), ni raccordée à ladite intersection de l'itinéraire guidé (S23) parmi lesdites données routières des routes entourant ladite intersection, de s'afficher sur lesdits moyens d'affichage (12).

3. Dispositif selon la revendication 2 dans lequel lesdits moyens de contrôle (4) sont adaptés pour déterminer si des critères prédéfinis sont satisfaits et pour limiter les informations manquant à satisfaire à ces critères.

4. Dispositif selon la revendication 2 ou 3, dans lequel lesdits moyens de contrôle (4) sont adaptés pour déterminer s'il s'agit d'une route raccordée à un itinéraire guidé et pour limiter les informations visualisées.

5. Dispositif selon la revendication 2, 3 ou 4, dans lequel lesdits moyens de contrôle (4) sont adaptés pour déterminer s'il s'agit d'une route carrossable et pour limiter les informations visualisées.

6. Dispositif selon l'une quelconque des revendications 2 à 5, dans lequel lesdits moyens de contrôle (4) sont adaptés pour utiliser une couleur identique à une couleur de fond afin d'empêcher virtuellement l'affichage des routes ne devant pas s'afficher sur lesdits moyens d'affichage (12).

7. Dispositif selon l'une quelconque des revendications 2 à 6, dans lequel lesdits moyens de contrôle (4) sont adaptés pour éliminer la visualisation des informations ne devant pas être affichées.

8. Dispositif selon l'une quelconque des revendications 2 à 7, dans lequel lesdits moyens de contrôle (4) sont adaptés pour permettre l'affichage d'un plan d'intersection dès détection de l'émission d'un signal d'instruction correspondant.

9. Dispositif selon l'une quelconque des revendications 2 à 8, comprenant en outre :
des moyens de détection de l'emplacement actuel (21 à 26) destinés à détecter l'emplacement actuel du véhicule ; dans lequel
lesdits moyens de contrôle (4) sont adaptés pour permettre l'affichage d'une intersection dès détection de la réception d'une instruction d'agrandissement de l'affichage d'une intersection lorsque le véhicule se situe à un emplacement spécifié avant une intersection de guidage à une distance prédéterminée de celle-ci.
